# EUROPÄISCHE PATENTSCHRIFT

(11) **EP 0 911 377 B1**
(45) Veröffentlichungstag und Bekanntmachung des Hinweises auf die Patenterteilung: **12.05.2004**
(21) Anmeldenummer: 98116540.0
(22) Anmeldetag: 02.09.1998
(51) Int. Cl.: C09J 11/08

(54) **Polyethylenwachs als Verarbeitungshilfe für Schmelzklebermassen**
Polyethylene wax as processing aid for hot melt adhesives
Cire de polyéthylène comme auxiliaire de mise en oeuvre pour les adhésifs thermofusibles

(30) Priorität: 23.10.1997 DE 19746834
(43) Veröffentlichungstag der Anmeldung: 28.04.1999
(73) Patentinhaber: Degussa AG, 40474 Düsseldorf (DE)
(72) Erfinder: Simon, Ulrich, 44625 Herne (DE); Gurke, Thorsten, 45721 Haltern (DE)

(56) Entgegenhaltungen:
- EP-A- 0 575 900
- CHEMICAL ABSTRACTS, vol. 124, no. 26, 24. Juni 1996 (1996-06-24) Columbus, Ohio, US; abstract no. 345362, GOS, BARBARA: "Effect of the kind and content of wax on properties of a hot - melt adhesive" XP002105394 & ZB. REF. - SYMP. "POKROKY VYROBE POUZITI LEPIDIEL DREVOPRIEM." (1995), 12TH, 384-91 CODEN: ZRSDEN,1995,
- CHEMICAL ABSTRACTS, vol. 106, no. 26, 29. Juni 1987 (1987-06-29) Columbus, Ohio, US; abstract no. 215008, OYOKAWA, FUMIO: "Properties of waxes for hot - melt adhesives. 2" XP002105395 & SETCHAKU (1986), 30(10), 437-46 CODEN: STHKAO;ISSN: 0037-0495,1986,
- CHEMICAL ABSTRACTS, vol. 106, no. 22, 1. Juni 1987 (1987-06-01) Columbus, Ohio, US; abstract no. 177599, OYOKAWA, FUMIO: "Properties of wax for hot - melt adhesives. 3" XP002105396 & SETCHAKU (1986), 30(11), 499-505 CODEN: STHKAO;ISSN: 0037-0495,1986,
- CHEMICAL ABSTRACTS, vol. 100, no. 12, 19. März 1984 (1984-03-19) Columbus, Ohio, US; abstract no. 86608, MORIKAWA, TOSHIYUKI: "Polyethylene wax for hot - melt adhesives" XP002105397 & SETCHAKU (1983), 27(10), 457-62 CODEN: STHKAO;ISSN: 0037-0495,1983,

## Beschreibung

Die Erfindung betrifft eine Schmelzklebermasse, die als Verarbeitungshilfe Polyethylenwachs enthält, zum Beschichten von Flächengebilden, beispielsweise von Textilien, Leder, Schaumstoffen oder Kunststoffolien

Es sind Schmelzlebermassen bekannt, die vorzugsweise in Form einer wäßrigen Paste rasterförmig auf ein zu beschichtendes Flächengebilde aufgebracht werden Anschließend wird getrocknet und gesintert. Das gesinterte Produkt stellt die Schmelzklebermasse dar. Die beschichteten Flächengebilde werden in Bahnform oder als Zuschnitte mit anderen bahnenförmigen oder zugeschnittenen Flächengebilden unter Einwirkung von Druck und vergleichsweise milder Temperatur zu Verbundstoffen mit besonders hoher Waschbeständigkeit und Haftung laminiert

Es sind zahlreiche Schmelzklebermassen fur das Siebdruckverfahren bekannt Diese sind hauptsächlich aus wäßrig-pastösen Mischungen aus Schmelzkleberfeinpulvern gebildet, welche auch in gröberer Kornform für sich alleine direkt zum Beschichten im Streu- oder Pulverpunktverfahren aufgetragen werden können Die heute meistens eingesetzten Schmelzklebermassen basieren auf Copolyamiden. Copolyestern oder Niederdruck-Polyethylen.

Zum Anteigen der Schmelzkleberfeinpulver zur Herstellung der Haftschicht werden spezielle Suspendier- bzw Dispergiermittel benutzt, die den Anteigungen eine saubere Druckfähigkeit verleihen Daneben sollen Dispergiermittel noch besondere Eigenschaftsmerkmale hervorrufen, beispielsweise die Verhinderung einer Sedimentation der eingemischten Pulver. eine konturenscharfe Ausbildung des Druckes, eine gesteuerte Penetration der Schmelzkleberpaste, eine Verhinderung des Durchschlages durch den Oberstoff, die Vermeidung eines Rückschlages beim Fixieren oder die Ausschaltung der Kantenverschweißung beim Zuschneiden der Flächengebilde. Derartige Dispergiermittel sind beispielsweise in den Patentschriften DE-B 20 07 971.

DE-B 22 29 308, DE-B 24 07 505, DE-B 25 07 504 und DE-B 35 10 109 beschrieben worden. Den Dispergiermitteln können Weichmacher beigefügt sein Häufig werden auch Additive aus hochmolekularem Polyethylenoxid zugefugt, wodurch die Lauffähigkeit der Paste erhöht werden soll

Bei der Herstellung von Schmelzkleberpulvern werden, zur Verbesserung der Absiebung und auch aus anwendungstechnischen Belangen, Stearate (Ca-, Mg- und Zn-), zugegeben. Mit Hilfe dieser Produkte können das Schüttgewicht und die Rieselfähigkeit der Pulver variiert werden. Amorphe feine Pulverfraktionen (0 bis 80 µm) neigen jedoch auch bei größerer Menge (0,5 %) zum Verklumpen

Es gibt jedoch bei der Verarbeitung von niedrigschmelzenden, niedrigviskosen. amorphen Polyester- und Polyamidschmelzklebern ein bekanntes Beschichtungsproblem, nämlich ein zu großer Tack, nachdem die beschichtete Einlage den Trockenofen verläßt. Ein Tack kennzeichnet die Klebrigkeit einer beschichteten Oberflache Man unterscheidet dabei zwischen einer Dauerklebrigkeit und einer temporären Klebrigkeit. Die temporäre Klebrigkeit kennzeichnet die Zeit bis zur Rekristallisation, d. h. die Zeit bis zur Unterschreitung der Schmelztemperatur. Das Ergebnis ist ein Anhaften auf den Kalanderwalzen (Streubeschichtung) oder Zusammenkleben der einzelnen Lagen auf der Aufwicklung, was bei der weiteren Verarbeitung zu großen Schwierigkeiten führt (Warenschau. Ablangung)

Der Erfindung lag daher die Aufgabe zugrunde, eine Schmelzklebermasse zu finden, die die beschriebenen Verarbeitungsnachteile nicht aufweist

Es wurde nun überraschend gefunden, daß Schmelzklebermassen gemaß den Ansprüchen, die ein Polyethylenwachs enthalten, diese Nachteile nicht aufweisen

In der EP-B 0575 900 wird zwar der Einsatz von Polyethylenwachs zum Entkleben von Polymeroberflächen beschrieben, eine Überwindung des beschriebenen Tack-Problems läßt sich daraus aber nicht ableiten.

Das erfindungsgemäße Polyethylenwachs soll folgende Eigenschaften aufweisen

| | |
|---|---|
| Molmasse | 500 bis 10 000 g/mol, vorzugsweise 1 000 bis 5 000 g/mol |
| Tropfpunkt | 100 bis 130 °C vorzugsweise 110 bis 115 °C |
| Viskosität bei 150 °C | 100 bis 380 mPa·s vorzugsweise 140 mPa·s |

Als handelsübliche Polyethylenwachse eignen sich z. B von der BASF: AF. AF30. AF31, AF 322 und von Hüls VESTOWAX A 616, A 415, A 227. A 235, oder ein oxidiertes Polyethylenwachs wie AO 15125, AO 1535, AO 1539 Die oxidierten Polyethylenwachse haben Tropfpunkte von 104 bis 130 °C, bevorzugt 106 bis 114 °C. und eine Viskosität von 100 bis 130 mPa·s bei 120 °C

Das Wachs oder das oxidierte Wachs wird in Mengen von 0.2 bis 6 Gew-%, bezogen auf Schmelzkleberpulver, in den Schmelzkleber eingearbeitet Fur die Streubeschichtung und die Pulverpunktbeschichtung wird das Wachs in Mengen von 0,1 bis 1 Gew.-%, vorzugsweise 0.2 bis 0.5 Gew.-%, bezogen auf Schmelzkleberpulver, eingesetzt. Fur die Pastenbeschichtung wird das Wachs in Mengen von 2 bis 6 Gew.-%, vorzugsweise 2 bis 3 Gew -%, bezogen auf die gesamte Paste, verwendet.

Beim Streu- und Pulverpunktauftrag empfiehlt es sich. das Polyethylenwachs möglichst homogen in der Pulvermischung zu verteilen. Das bedeutet. es entweder vor der Vermahlung auf das Granulat aufzuziehen oder in einem Masterbatch bei der Homogenisierung zuzugeben.

Bei der Pastenbeschichtung kann das Polyethylenwachs getrennt. als Additiv zugegeben werden.

Uberraschenderweise bringt das Polyethylenwachs bei den unterschiedlichen Auftragungsmethoden gravierende Vorteile.

Bei der Streubeschichtung verhindert es das Ankleben an Kalanderwalzen, wenn mit amorphen Copolyamiden und Copolyestern beschichtet wird oder wenn große Mengen, auch kristalliner Schmelzkleber aufgestreut werden, die noch einen sehr großen Wärmeinhalt haben (Einsatzmenge etwa 0.2 bis 0,5 %).

Bei der Pastenbeschichtung erzielt man eine gute Dispergierung von Schmelzkleberpulvern in wäßrigen Systemen Außerdem wird ein Zusammenkleben der einzelnen Bahnen beim Aufwickeln verhindert, wenn mit weichgemachten, niedrigschmelzenden, amorphen Polyamiden oder Polyestern gearbeitet wird (Einsatzmenge ca 3 %).

Bei Pulverbeschichtungen wird eine deutliche Verbesserung des Beschichtungsbildes beobachtet. Die Einzelpunkte sind deutlich erhabener. der Punkt runder und glatter Die Gravuren der Auftragswalzen werden besser geleert. Auch hier ist eine schnellere Rekristallisation der Schmelze zu beobachten und der Beschichtungstack verschwindet. so daß es nicht zu Problemen bei der Aufwicklung kommt. Die Waschergebnisse bei 60 °C sind deutlich besser bei Polyesterbeschichtungen, wenn man 0.2 % Polyethylenwachs zum Pulver, zugibt.

Bei der Vermahlung, Siebung und Abfüllung amorpher Polyester wird die Rieselfähigkeit verbessert und die Pulver neigen beim Transport nicht mehr zum Verklumpen.

### Beispiele

Eine rohweiße Battisteinlage, aus Baumwolle in Leinwandbindung von 40 g/m², wurde auf einer 1 cm breiten Saladinanlage mit 30 Mesh im Pulverpunkt beschichtet.

### Maschinenparameter:

| | |
|---|---|
| Heizwalzentemperatur | 220 °C |
| Gravurwalzentemperatur | 45 °C |
| Geschwindigkeit | 20 m/min |

### Beschichtungspulver:

Versuch a) VESTAMELT 4680-P 816 Standard
Versuch b) VESTAMELT 4680-P 816 mit 0,2 % Polyethylenwachs (VESTOWAX A 616 SF) im Schnellmischer konfektioniert. Beim VESTAMELT 4680 handelt es sich um Copolyesterschmelzkleber der Hüls AG. Die Polyester haben als Grundbausteine Isophthalsäure, Terephthalsäure, Butandiol, Hexandiol und Dicarbonsäuren von C₆- bis C₁₂.
VESTAWAX A 616 SF ist ein Wachs mit einem Tropfpunkt von 118 bis 128 °C, einer Molmasse von ca. 1 600 g/mol und einer Viskosität bei 150 °C von < 140 mPa·s.

### Laufeigenschaften und Punktbild:

- Versuch a): zeigte einen leicht zerrissenen, rauhen Punkt.
- Versuch b): zeigte ein gleichmäßiges sauberes Punktraster mit weichem textilen Griff. Jeder einzelne Punkt war rund und erhaben.

### Schältest und Waschbeständigkeit:

Beide nach beschriebener Vorschrift beschichteten Einlagen wurden bei 127 °C Fugentemperatur gegen einen Baumwollhemdenstoff mit einer Fixierzeit von 10 s und 4 N Liniardruck verpreßt. Nach 24 h wurden die Verbunde in 5 cm breite Streifen geschnitten und ein Schältest durchgeführt.
1) Primärhaftung
2) nach 1 und 3 Wäschen bei 60 °C

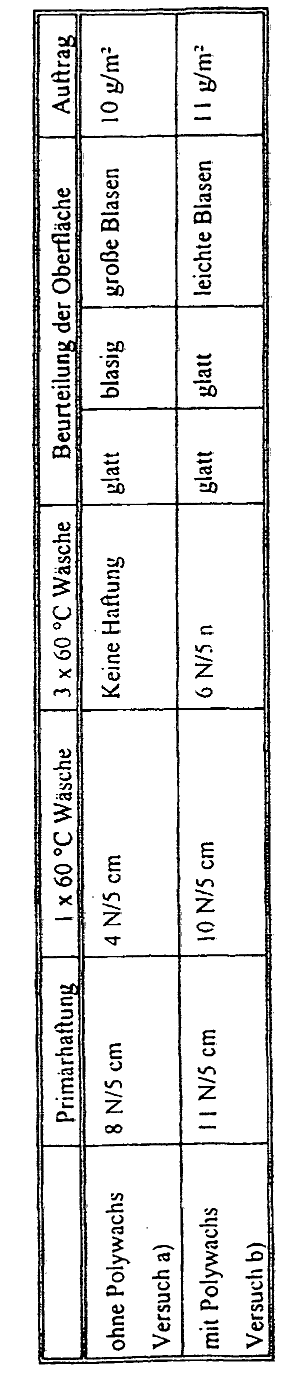

Vorteile des erfindungsgemäßen Beschichtungssystems
1.) Besseres Beschichtungsverhalten (runder Punkt, gleichmäßiger Punktraster)
2.) Bessere Primärhaftung
3.) Bessere Beständigkeit gegen 60 °C Wäsche.

Streubeschichtung eines Nadelvlieses für die Herstellung von Hutablagen

Es wurde eine Streubeschichtung
mit VESTAMELT 350-P 4 Standard
und VESTAMELDT 350-P 4 mit VESTOWAX A 616 SF durchgeführt

### Maschinenparameter

| | |
|---|---|
| Saladinanlage | 2 m Breite |
| Beschichtungstemperatur | |
| nach Verlassen des Infrarotfeldes: | 135 °C |
| Kalandrierung | |
| Geschwindigkeit. | 12 m/min |
| Pulverauftrag: | 80 g/m² |
| Nadelvlies: | Polypropylen (beige) |

### Beschichtungspulver:

a) VESTAMELT 350-P 4 Standard
b) VESTAMELT 350-P 4 mit 0.5 % Polyethylenwachs

### Streubild:

| | |
|---|---|
| ohne Polywachs a) | Pulver rieselte vorzeitig aus dem Nadelband des Streuers. dadurch unregelmäßiger Auftrag |
| mit Polywachs b) | Pulver hielt sich gut im Nadelband des Streuers, dadurch gleichmäßiger Pulverauftrag. |

### Beschichtungsverhalten

a) Schon nach kurzer Zeit war ein Pulverübertrag von dem beschichteten Nadelvlies auf die Kalanderwalzen zu beobachten. Behandlung der Chromwalzen mit Silkonol brachte nur zeitweise Erfolg
b) Nach 1 Stunde Beschichtung mit dem erfindungsgemäßen Pulver war noch kein Übertrag auf die Kalanderwalzen zu beobachten.

## Patentansprüche

1. Schmelzklebermasse auf Basis von Polyamid oder Polyester für die Beschichtung von Flächengebilden,
**dadurch gekennzeichnet,**
**dass** sie als Verarbeitungshilfe Polyethylenwachs mit einer Molmasse von 1 000 bis 5 000 g/mol und einem Tropfpunkt von 110 bis 115 °C oder ein oxidiertes Polyethylenwachs mit einem Tropfpunkt von 106 bis 114 °C in einer Menge von 0,2 bis 6 Gew.- %, bezogen auf Schmelzkleberpulver, enthält.

2. Schmelzklebermasse nach Anspruch 1,
**dadurch gekennzeichnet,**
**dass** sie für die Streubeschichtung Polyethylenwachs in einer Menge von 0,1 bis 1 Gew.-%, bezogen auf Schmelzkleberpulver, enthält.

3. Schmelzklebermasse nach Anspruch 1,
**dadurch gekennzeichnet,**
**dass** sie für die Streubeschichtung Polyethylenwachs in einer Menge von 0,2 bis 0,5 Gew.-%, bezogen auf Schmelzkleberpulver, enthält.

4. Schmelzklebermasse nach Anspruch 1,
**dadurch gekennzeichnet,**
**dass** sie für die Pastenbeschichtung Polyethylenwachs in einer Menge von 2 bis 6 Gew.-%, bezogen auf die fertige Paste, enthält.

5. Schmelzklebermasse nach Anspruch 1,
**dadurch gekennzeichnet,**
**dass** sie für die Pastenbeschichtung Polyethylenwachs in einer Menge von 2 bis 3 Gew.-%, bezogen auf die fertige Paste, enthält.

6. Schmelzklebermasse nach Anspruch 1,
**dadurch gekennzeichnet,**
**dass** sie für die Pulverpunktbeschichtung Polyethylenwachs in einer Menge von 0,1 bis 1 Gew.-%, bezogen auf Schmelzkleberpulver, enthält.

7. Schmelzklebermasse nach einem der vorherigen Ansprüche,
**dadurch gekennzeichnet,**
**dass** sie für die Pulverpunktbeschichtung Polyethylenwachs in einer Menge von 0,2 bis 0,5 Gew.-%, bezogen auf Schmelzkleberpulver, enthält.

8. Schmelzklebermasse nach einem der vorherigen Ansprüche,
**dadurch gekennzeichnet,**
**dass** das Polyethylenwachs eine Viskosität bei 150 °C von 100 bis 380 mPa·s aufweist.

9. Schmelzklebermasse nach einem der vorherigen Ansprüche,
**dadurch gekennzeichnet,**
**dass** das oxidierte Polyethylenwachs eine Viskosität bei 120 °C von 100 bis 130 mPa·s aufweist.

10. Verwendung der Schmelzklebermasse nach einem der vorherigen Ansprüche zur Beschichtung von Flächengebilden.

## Claims

1. A hotmelt adhesive composition based on polyamide or polyester for the coating of sheetlike structures, **characterized in that** it contains polyethylene wax having a molar mass of from 1000 to 5000 g/mol and a dropping point of from 110 to 115°C or an oxidized polyethylene wax having a dropping point of from 106 to 114°C as processing aid in an amount of from 0.2 to 6% by weight, based on hotmelt adhesive powder.

2. A hotmelt adhesive composition according to claim 1, **characterized in that** for scatter coating it contains polyethylene wax in an amount of from 0.1 to 1% by weight, based on hotmelt adhesive powder.

3. A hotmelt adhesive composition according to claim 1, **characterized in that** for scatter coating it contains polyethylene wax in an amount of from 0.2 to 0.5% by weight, based on hotmelt adhesive powder.

4. A hotmelt adhesive composition according to claim 1, **characterized in that** for paste coating it contains polyethylene wax in an amount of from 2 to 6% by weight, based on the finished paste.

5. A hotmelt adhesive composition according to claim 1, **characterized in that** for paste coating it contains polyethylene wax in an amount of from 2 to 3% by weight, based on the finished paste.

6. A hotmelt adhesive composition according to claim 1, **characterized in that** for powder dot coating it contains polyethylene wax in an amount of from 0.1 to 1% by weight, based on hotmelt adhesive powder.

7. A hotmelt adhesive composition according to claim 1, **characterized in that** for powder dot coating it contains polyethylene wax in an amount of from 0.2 to 0.5% by weight, based on hotmelt adhesive powder.

8. A hotmelt adhesive composition according to any one of the preceding claims, **characterized in that** the polyethylene wax has a viscosity at 150°C of from 100 to 380 mPa·s.

9. A hotmelt adhesive composition according to any one of the preceding claims, **characterized in that** the oxidized polyethylene wax has a viscosity at 120°C of from 100 to 130 mPa·s.

10. The use of a hotmelt adhesive composition according to any one of the preceding claims for coating sheetlike structures.

## Revendications

1. Masse de colle par fusion à base de polyamide ou de polyester pour le revêtement de structures surfaciques,
**caractérisée en ce qu'**
elle renferme comme adjuvant de façonnage de la cire de polyéthylène ayant une masse molaire de 1000 à 5000 g/mol et un point de goutte de 110 à 115°C, ou bien de la cire de polyéthylène oxydée ayant un point de goutte de 106 à 114°C, en une quantité allant de 0,2 à 6 % en poids, rapporté à la colle par fusion en poudre.

2. Masse de colle par fusion selon la revendication 1,
**caractérisée en ce qu'**
elle renferme pour le revêtement par dispersion de la cire de polyéthylène en une quantité de 0,1 à 1 % en poids, rapporté à la colle par fusion en poudre.

3. Masse de colle par fusion selon la revendication 1,
**caractérisée en ce qu'**
elle renferme pour le revêtement par dispersion de la cire de polyéthylène en une quantité de 0,2 à 0,5 % en poids, rapporté à la colle par fusion en poudre.

4. Masse de colle par fusion selon la revendication 1,
**caractérisée en ce qu'**
elle renferme pour le revêtement en pâte, de la cire de polyéthylène en une quantité allant de 2 à 6 % en poids, rapporté à la pâte terminée.

5. Masse de colle par fusion selon la revendication 1,
**caractérisé en ce qu'**
elle renferme pour le revêtement en pâte, de la cire de polyéthylène en une quantité allant de 2 à 3 % en poids, rapporté à la pâte terminée.

6. Masse de colle par fusion selon la revendication 1,
**caractérisée en ce qu'**
elle renferme pour le revêtement par point de poudre, de la cire de polyéthylène en une quantité qui s'échelonne de 0,1 à 1 % en poids rapporté à la colle par fusion en poudre.

7. Masse de colle par fusion selon l'une des revendications précédentes,
**caractérisée en ce qu'**
elle renferme pour le revêtement par point de poudre, de la cire de polyéthylène en une quantité s'échelonnant de 0,2 à 0,5 % en poids rapporté à la poudre de colle par fusion.

8. Masse de colle par fusion selon l'une des revendications précédentes,
**caractérisée en ce que**
la cire de polyéthylène manifeste une viscosité à 150°C allant de 100 à 380 mPas.

9. Masse de colle par fusion selon l'une des revendications précédentes,
**caractérisée en ce que**
la cire de polyéthylène oxydée manifeste une viscosité à 120°C allant de 100 à 130 mPas.

10. Utilisation de la masse de colle par fusion selon l'une des revendications précédentes, pour le revêtement de structures surfaciques.
